Europäisches Patentamt

European Patent Office

Office européen des brevets

(19)

(11) Numéro de publication : **0 351 274 B1**

# (12) FASCICULE DE BREVET EUROPEEN

(45) Date de publication du fascicule du brevet :
18.09.91 Bulletin 91/38

(51) Int. Cl.⁵ : **G01P 1/10**

(21) Numéro de dépôt : **89401815.9**

(22) Date de dépôt : **26.06.89**

---

(54) **Dispositif de détermination et d'indication d'une vitesse maximale conseillée d'un véhicule automobile.**

---

(30) Priorité : **11.07.88 FR 8809415**

(43) Date de publication de la demande :
**17.01.90 Bulletin 90/03**

(45) Mention de la délivrance du brevet :
**18.09.91 Bulletin 91/38**

(84) Etats contractants désignés :
**DE GB IT**

(56) Documents cités :
**DE-A- 3 619 824**
**GB-A- 1 100 210**
**US-A- 2 828 916**
**US-A- 4 334 215**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Chouin Michel**
**21 Bis, Avenue du Maréchal Joffre**
**78800 Houilles (FR)**
Inventeur : **Soulignac Vincent**
**23, rue Millet**
**91140 Villebon S/Yvette (FR)**

(74) Mandataire : **Polus, Camille et al**
**c/o Cabinet Lavoix 2, Place d'Estienne d'Orves**
**F-75441 Paris Cedex 09 (FR)**

## Description

La présente invention concerne un dispositif de détermination et d'indication de la vitesse maximale conseillée d'un véhicule automobile en fonction de paramètres de fonctionnement de celui-ci.

Il existe déjà dans l'état de la technique plusieurs systèmes permettant de déterminer une anomalie dans l'état par exemple des pneumatiques d'un véhicule automobile (US-A-4334215). Ces différents systèmes comportent des moyens de mesure de la pression des pneumatiques du véhicule, de la température de ceux-ci ou bien de ces deux paramètres, pour permettre de déterminer un état de surchauffe ou de dégonflement anormal et un risque d'éclatement d'un pneumatique.

En cas d'anomalie, le conducteur du véhicule est informé par exemple par l'intermédiaire de moyens d'alarme sonores ou autres, mais ces indications risquent d'être mal interprétées et en tout état de cause ne permettent pas à l'utilisateur de déterminer dans quelles conditions le véhicule peut encore rouler, ce qui dans certains cas peut être préjudiciable.

Le but de l'invention est donc de résoudre ces problèmes en proposant un dispositif permettant d'indiquer à l'utilisateur dans quelles conditions le véhicule peut encore rouler.

A cet effet, l'invention a pour objet un dispositif de détermination et d'indication d'une vitesse maximale conseillée d'un véhicule automobile en fonction de paramètres de fonctionnement de celui-ci, caractérisé en ce qu'il comporte des moyens de mesure de caractéristiques physiques des pneumatiques, des moyens de détermination de la vitesse maximale conseillée à partir de ces différentes caractéristiques et des moyens d'indication de la vitesse maximale conseillée ainsi déterminée.

Avantageusement, las caractéristiques physiques mesurées sont la température et la pression des pneumatiques.

Avantageusement également, les moyens de détermination comprennent un microprocesseur de comparaison des caractéristiques mesurées avec des données d'un tableau de valeurs limites, stocké dans des moyens de mémorisation reliés à ce microprocesseur, pour déterminer la vitesse maximale conseillée du véhicule.

L'invention sera mieux comprise à l'aide de la description qui va suivre, donnée uniquement à titre d'exemple et faite en se référant aux dessins annexés, sur lesquels :

— la Fig. 1 représente un schéma synoptique d' un dispositif selon l'invention ; et

— la Fig. 2 représente une vue en coupe d'un indicateur de vitesse entrant dans la constitution d'un mode de réalisation d'un dispositif selon l'invention.

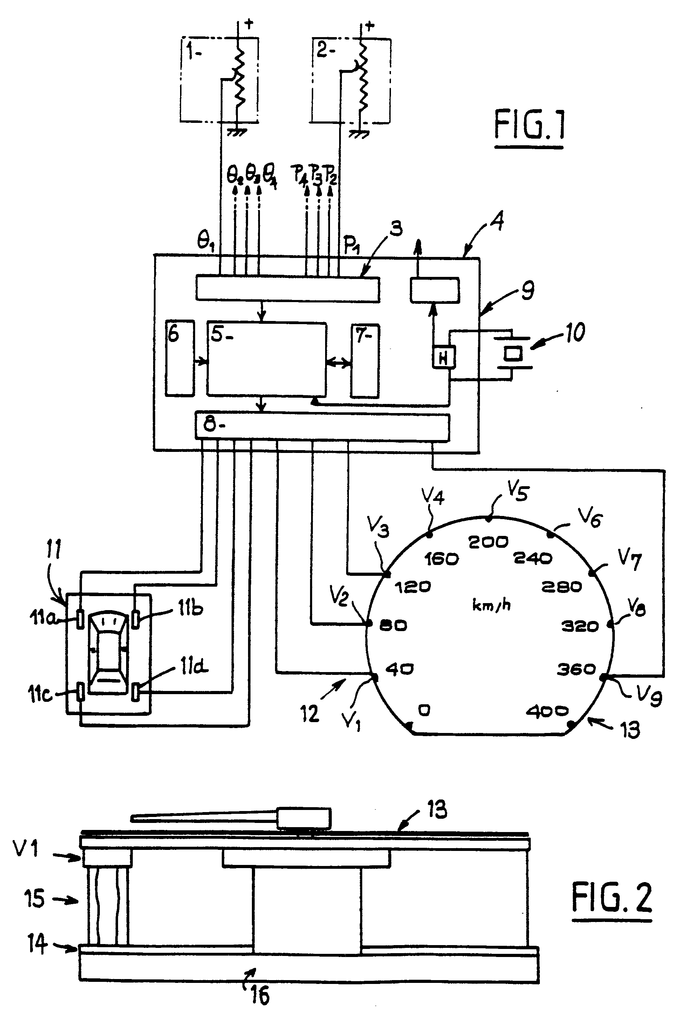

Ainsi qu'on peut le voir sur la Fig. 1, qui représente un schéma synoptique d'un dispositif selon l'invention, celui-ci comporte des moyens 1 de mesure de la température des pneumatiques d'un véhicule automobile et des moyens 2 de mesure de la pression de ceux-ci.

Ces différents moyens de mesure sont reliés à une interface d'entrée 3 d'une unité 4 de traitement d'informations, cette unité comportant également un microprocesseur 5 relié à une mémoire morte 6 et à une mémoire dynamique 7. La sortie du microprocesseur est reliée à une interface de sortie 8, de même qu'à une base de temps 9 comportant par exemple un oscillateur à quartz 10.

Quatre sorties de l'interface de sortie 8 de l'unité 4 de traitement sont reliées à des moyens de visualisation 11 d'un synoptique du véhicule disposé par exemple sur le tableau de bord de celui-ci. Plus particulièrement, ces sorties de l'interface sont reliées à quatre éléments 11a, 11b, 11c, 11d de celui-ci, illustrant les roues du véhicule comme cela sera décrit plus en détail par la suite. Ces moyens de visualisation sont constitués par tous moyens d'affichage appropriés comme par un afficheur à cristaux liquides ou autre.

D'autres sorties de l'interface de sortie 8 de l'unité de traitement sont reliées par exemple à un ensemble 12 de diodes électroluminescentes, référencées respectivement V1 à V9, régulièrement réparties sur l'indicateur de vitesse 13 du tableau de bord du véhicule, par exemple tous les 40 km/heure, et dont la fonction sera décrite plus en détail par la suite.

Les informations de température et de pression des pneumatiques du véhicule sont transmises par l'intermédiaire de la mémoire dynamique 7 au microprocesseur 5 qui les compare avec un tableau de valeurs limites de référence, stocké par exemple dans la mémoire morte 6 pour déterminer une vitesse maximale de roulage conseillé du véhicule en fonction de l'état des pneumatiques de celui-ci.

Cette vitesse maximale conseillée est ensuite transmise au conducteur par l'intermédiaire de moyens d'affichage comme les diodes électroluminescentes V1 à V9 disposées sur l'indicateur de vitesse 13 du véhicule.

En effet, si par exemple une vitesse maximale conseillée de 200 km/h, est déterminée au vu des mesures de température et de pression des pneumatiques du véhicule par le microprocesseur, toutes les diodes électroluminescentes disposées entre 200 km/h et 400 km/h sur l'indicateur de vitesse, c'est à dire les diodes V5 à V9, peuvent s'allumer sous la commande du microprocesseur, indiquant ainsi au conducteur du véhicule une zone de vitesse interdite conseillée.

Par ailleurs, les éléments 11a à 11d illustrant les roues sur le synoptique 11 du véhicule peuvent également s'éclairer pour indiquer au conducteur quel pneumatique présente une anomalie.

Il va de soi que d'autres modes de réalisation des moyens d'indication de la vitesse maximale conseillée peuvent être utilisés.

Ainsi, ces moyens d'indication peuvent également comporter seul ou en combinaison avec les diodes décrites précédemment, un afficheur alphanumérique ou à matrice de points, commandé par le microprocesseur et sur lequel défile un message indiquant une vitesse maximale conseillée et délivrant un message d'explication de cette limitation, par exemple " le pneu avant gauche présente une température trop élevée" ou " le pneu arrière droit présente une pression insuffisante".

Comme on peut le voir sur la Fig. 2, les diodes électroluminescentes par exemple V1, peuvent être fixées sur une plaque de circuits imprimés rigide 14 par l'intermédiaire d'un organe de fixation 15, les diodes étant disposées par exemple en regard d'évidements de l'indicateur débouchant sur sa face visible par le conducteur. La plaque de circuits imprimés est fixée sur le reste de l'organe de support 16 de l'indicateur de vitesse par tous moyens appropriés.

Il va de soi que d'autres modes d'affichage de la vitesse maximale conseillée et de moyens d'indication de celle-ci peuvent être utilisés.

Ainsi par exemple, le microprocesseur peut commander l'allumage des diodes électroluminescentes d'indication de vitesse maximale conseillée du véhicule dans la plage autorisée de fonctionnement, c'est à dire pour des vitesses inférieures à la vitesse maximale conseillée déterminée et qui seraient les diodes V1 à V5 dans l'exemple des 200 km/h décrit précédemment.

Selon un autre mode de réalisation, les moyens d'indication de cette vitesse peuvent également comporter un témoin lumineux clignotant lorsque le véhicule dépasse la vitesse maximale conseillée ou une aiguille lumineuse changeant de couleur lorsque cette vitesse maximale conseillée est dépassée, ces moyens étant associés éventuellement à une alarme sonore.

Il va de soi que le tableau de valeurs limites de référence tient compte également de paramètres comme le type de pneumatiques utilisés, l'état de la route, etc...

## Revendications

1. Dispositif de détermination et d'indication d'une vitesse maximale conseillée d'un véhicule automobile, en fonction de paramètres de fonctionnement de celui-ci, comportant des moyens de mesure (1, 2) de caractéristiques physiques des pneumatiques de celui-ci, caractérisé en ce qu'il comporte des moyens (5, 6, 7) de détermination de la vitesse maximale conseillée à partir de ces différentes caractéristiques et des moyens d'indication (11, 12, 13) de la vitesse maximale conseillée ainsi déterminée.

2. Dispositif selon la revendication 1, caractérisé en ce que les caractéristiques physiques mesurées sont la température et la pression des pneumatiques.

3. Dispositif selon la revendication 1 ou 2, caractérisé en ce que les moyens de détermination de la vitesse maximale conseillée comprennent un microprocesseur (5) de comparaison des mesures de température et de pression effectuées sur les pneumatiques avec des données d'un tableau de valeurs limites, stocké dans des moyens de mémorisation (6) reliés au microprocesseur (5), pour déterminer la vitesse maximale conseillée.

4. Dispositif selon la revendication 3, caractérisé en ce que les moyens d'indication de la vitesse maximale conseillée comprennent des diodes électroluminescentes (12, V1 à V9) régulièrement réparties sur l'indicateur (13) de vitesse du véhicule, l'allumage de ces diodes étant commandé par le microprocesseur (5) pour indiquer la vitesse maximale conseillée.

5. Dispositif selon la revendication 4, caractérisé en ce que les diodes électroluminescentes (12) indiquant la vitesse maximale conseillée s'allument dans la partie de l'indicateur de vitesse (13) correspondant à des vitesses supérieures à la vitesse maximale conseillée.

6. Dispositif selon la revendication 4, caractérisé en ce que les diodes électroluminescentes (12) indiquant la vitesse maximale conseillée s'allument dans la partie de l'indicateur de vitesse (13) correspondant à des vitesses inférieures à la vitesse maximale conseillée.

7. Dispositif selon l'une quelconque des revendications précédentes, caractérisé en ce qu'il comporte des moyens (11) de visualisation d'un pneumatique défaillant.

8. Dispositif selon la revendication 7, caractérisé en ce que les moyens de visualisation d'un pneumatique défaillant comprennent des moyens de visualisation (11) d'un synoptique du véhicule dont des éléments (11a à 11d) illustrant la position des roues du véhicule sont commandés par le microprocesseur (5) pour indiquer un pneumatique défaillant.

9. Dispositif selon l'une quelconque des revendications précédentes, caractérisé en ce que les moyens d'indication de la vitesse maximale conseillée comprennent des moyens d'affichage de cette vitesse et d'indication de la cause de cette limitation de vitesse conseillée.

## Patentansprüche

1. Vorrichtung zur Bestimmung und Anzeige der empfohlenen Höchstgeschwindigkeit eines Kraftfahrzeuges in Abhängigkeit der Funktionsparameter dieses Fahrzeuges, die Mittel (1, 2) für die Messung der physikalischen Eigenschaften der Pneumatik des letzteren aufweist, **dadurch gekennzeichnet, daß** sie Mittel (5, 6, 7) für die Bestimmung der empfohlenen Höchstgeschwindigkeit aufgrund dieser verschiedenen Eigenschaften aufweist, sowie Mittel für die Anzeige (11, 12, 13) der so bestimmten empfohlenen Höchstgeschwindigkeit.

2. Vorrichtung nach Anspruch 1, **dadurch gekennzeichnet, daß** die gemessenen physikalischen Eigenschaften die Temperatur und der Druck der Pneumatik sind.

3. Vorrichtung nach einem der Ansprüche 1 oder 2, **dadurch gekennzeichnet, daß** die Mittel für die Bestimmung der empfohlenen Höchstgeschwindigkeit einen Mikroprozessor (5) für den Vergleich der an der Pneumatik durchgeführten Messung der Temperatur und des Druckes mit den Daten einer Tabelle von Grenzwerten enthält, die in einem Speicher (6) gelagert ist, der mit dem Mikroprozessor (5) verbunden ist, um die empfohlene Höchstgeschwindigkeit zu bestimmen.

4. Vorrichtung nach Anspruch 3, **dadurch gekennzeichnet, daß** die Mittel für die Anzeige der empfohlenen Höchstgeschwindigkeit Elektroluminiszenzdioden (12, V1 bis V9) enthält, die gleichmäßig über die Anzeigevorrichtung (13) der Fahrzeuggeschwindigkeit verteilt sind, wobei die Beleuchtung dieser Dioden durch den Mikroprozessor (5) gesteuert werden, um die empfohlene Höchtsgeschwindigkeit anzuzeigen.

5. Vorrichtung nach Anspruch 4, **dadurch gekennzeichnet, daß** die Elektroluminiszenzdioden (12), die die empfohlenene Höchstgeschwindigkeit anzeigen, in dem Teil der Geschwindigkeitsanzeige (13) aufleuchten, der den Geschwindigkeiten entspricht, die über der empfohlenen Höchstgeschwindigkeit liegen.

6. Vorrichtung nach Anspruch 4, **dadurch gekennzeichnet, daß** die Elektroluminiszenzdioden (12), welche die empfohlene Höchstgeschwindigkeit anzeigen, in dem Teil der Geschwindigkeitsanzeige (13) aufleuchten, der Geschwindigkeiten entspricht, die unter der empfohlenen maximalen Höchstgeschwindigkeit liegen.

7. Vorrichtung nach einem der vorausgegangenen Ansprüche, **dadurch gekennzeichnet, daß** sie Mittel (11) für die Visualisierung einer ausfallenden Pneumatik aufweit.

8. Vorrichtung nach Anspruch 7, **dadurch gekennzeichnet, daß** die Mittel für die Visualisierung eines Ausfalls einer Pneumatik Mittel für die Visualisierung (11) eines Blockschaltbildes eines Fahrzeuges enthalten, dessen Elemente (11a bis 11d), die die Stellung der Fahrzeugräder anzeigen, durch den Mikroprozessor (5) gesteuert werden, um eine ausfallende Pneumatik anzuzeigen.

9. Vorrichtung nach einem der vorausgegangenen Ansprüche, **dadurch gekennzeichnet, daß** die Mittel für die Anzeige der empfohlenen Höchstgeschwindigkeit Mittel für die Anzeige dieser Geschwindigkeit und für das Aufzeigen der Ursache der Begrenzung dieser empfohlenen Geschwindigkeit aufweisen.

## Claims

1. Device for determining and indicating a recommended maximum speed of a motor vehicle as a function of its running parameters, comprising means (1, 2) for measuring physical properties of the tyres of the said motor vehicle, characterised in that it comprises means (5, 6, 7) for determining the recommended maximum speed from these various properties, and means (11, 12, 13) for indicating the recommended maximum speed determined in this way.

2. Device according to Claim 1, characterised in that the physical properties measured are the temperature and the pressure of the tyres.

3. Device according to Claim 1 or 2, characterised in that the means for determining the recommended maximum speed comprise a microprocessor (5) for comparing the temperature and pressure measurements carried out on the tyres with data from a table of limit values, which table is stored in memorisation means (6) connected to the microprocessor (5), in order to determine the recommended maximum speed.

4. Device according to Claim 3, characterised in that the means for indicating the recommended maximum speed comprise light-emitting diodes (12, V1 to V9) regularly distributed on the speedometer (13) of the vehicle, the illumination of these diodes being controlled by the microprocessor (5) in order to indicate the recommended maximum speed.

5. Device according to Claim 4, characterised in that the light-emitting diodes (12) indicating the recommended maximum speed are illuminated in the part of the speedometer (13) corresponding to speeds greater than the recommended maximum speed.

6. Device according to claim 4, characterised in that the light-emitting diodes (12) indicating the recommended maximum speed are illuminated in the part of the speedometer (13) corresponding to speeds less than the recommended maximum speed.

7. Device according to any one of the preceding claims, characterised in that it comprises faulty-tyre display means (11).

8. Device according to Claim 7, characterised in that the faulty-tyre display means comprise means (11) for displaying a diagram of the vehicle in which elements (11a to 11d) illustrating the position of the wheels of the vehicle are controlled by the microprocessor (5) in order to indicate a faulty tyre.

9. Device according to any one of the preceding claims, characterised in that the means for indicating the recommended maximum speed comprise read-out means for this speed and for indicating the cause of this recommended speed limitation.

# FIG.1

# FIG.2